# FASCICULE DE BREVET EUROPEEN

(11) **EP 3 692 290 B1**
(45) Date de publication et mention de la délivrance du brevet: **29.09.2021**
(21) Numéro de dépôt: 18780172.5
(22) Date de dépôt: 02.08.2018
(51) Int. Cl.: F16K 35/02, F16K 31/60, F17C 13/04, F16K 1/30, F16K 35/14, F16K 1/44, F16K 31/524

(54) **ROBINET ET DISPOSITIF DE STOCKAGE ET DE DISTRIBUTION DE FLUIDE SOUS PRESSION**
VENTIL UND VORRICHTUNG ZUM SPEICHERN UND ABGEBEN VON UNTER DRUCK STEHENDEM FLUID
VALVE AND DEVICE FOR STORING AND DISPENSING PRESSURIZED FLUID

(30) Priorité: 05.10.2017 FR 1701024; 05.10.2017 FR 1701025
(43) Date de publication de la demande: 12.08.2020
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: VIGNEROL, Samuel, 78330 Fontenay Le Fleury (FR); FRENAL, Antoine, 95460 Ezanville (FR); MULLER, Denis, 92500 Rueil Malmaison (FR); PAOLI, Hervé, 92500 Rueil-Malmaison (FR); ONDO, Olivier, 91120 Palaiseau (FR); LAMIABLE, Morgan, 57940 Metzervisse (FR); BROECHLER, Johan, 54190 Villerupt (FR); DI FILIPPO, Claudio, 57645 Noisseville (FR)
(74) Mandataire: Air Liquide
(86) Numéro de dépôt international: PCT/FR2018/051994
(87) Numéro de publication internationale: WO 2019/068970

(56) Documents cités:
- FR-A1- 2 793 297
- FR-A1- 2 840 664
- FR-A1- 2 974 402
- FR-A3- 2 790 299
- FR-A3- 2 790 299
- US-A- 6 035 463
- US-A1- 2006 175 569

## Description

L'invention concerne un robinet et un dispositif de stockage et de distribution de fluide sous pression.

L'invention concerne plus particulièrement un robinet pour fluide sous pression comprenant un corps ayant une face avant et une face arrière et abritant un circuit interne de fluide ayant une extrémité amont destinée à être mise en relation avec une réserve de fluide sous pression et extrémité aval destinée à être mise en relation avec un utilisateur de fluide, le circuit (3) comprenant un ensemble de clapet(s) comprenant au moins un clapet d'obturation permettant de fermer ou d'ouvrir le circuit, le robinet comprend un organe de commande manuelle de l'ensemble de clapet(s), l'organe de commande étant monté mobile sur le corps entre une position de repos dans laquelle l'ensemble de clapet(s) est dans une position de fermeture du circuit et une position active dans laquelle l'organe de commande actionne l'ensemble de clapet(s) dans une position d'ouverture du circuit selon une première section d'ouverture, le robinet comportant un mécanisme de verrouillage de l'organe de commande dans sa position de repos, le mécanisme de verrouillage comprenant levier de verrouillage muni d'une extrémité de préhension, le levier de verrouillage étant mobile sur le corps entre une première position de verrouillage assurant un verrouillage de l'organe de commande empêchant son déplacement de sa position de repos vers sa position active, et une seconde position de déverrouillage de l'organe de commande autorisant son déplacement de sa position de repos vers sa position active, dans la première position de verrouillage du levier de verrouillage, l'extrémité de préhension du levier de verrouillage étant disposée le long ou en vis-à-vis de la face avant du corps du robinet à une première distance de la face avant du corps du robinet.

Pour des raisons de sécurité, il est connu de prévoir un mécanisme de verrouillage de l'organe de commande manuelle de l'ouverture d'un clapet d'isolation d'un robinet de bouteille(s) de gaz sous pression (cf. par exemple FR2793297A1).

Un risque d'un tel mécanisme peut être un actionnement intempestif. Par exemple, lors du transport, d'une chute ou de la manutention de la bouteille munie d'un tel robinet, un objet saillant (axe rectiligne ou autre) peut actionner ce mécanisme qui déverrouille l'organe de commande. Ce déplacement intempestif de l'organe de verrouillage/déverrouillage est d'autant plus dangereux lorsque son actionnement permet une préouverture du robinet pour libérer du gaz avant même le déplacement de l'organe de commande. FR2790299 décrit un robinet selon le préambule de la revendication 1.

Un but de la présente invention est de pallier tout ou partie des inconvénients de l'art antérieur relevés ci-dessus.

A cette fin, selon l'invention, dans la seconde position de déverrouillage du levier de verrouillage, l'extrémité de préhension est écartée de la face avant du corps du robinet d'une seconde distance qui est supérieure à la première distance, le corps du robinet comporte une portion d'occultation au moins de l'extrémité terminale de préhension du levier formant un écran entre la face arrière du corps du robinet et l'extrémité de préhension du levier, pour empêcher ou limiter la possibilité qu'un objet rectiligne ne puisse pousser le levier de verrouillage par l'arrière du robinet au niveau de l'extrémité terminale de préhension de sa position de verrouillage vers sa position de déverrouillage, et dans sa seconde position de déverrouillage, le levier de verrouillage actionne l'ensemble de clapet(s) dans une position d'ouverture du circuit selon une seconde section (S2) d'ouverture.

La forme du corps du robinet (le robinet lui-même ou une coque qui l'entoure) permet ainsi de bloquer ou de dévier la trajectoire de l'objet impactant, afin qu'il ne rentre pas en contact avec le levier.

Cette géométrie peut coopérer avantageusement avec la géométrie d'un chapeau de protection pour encore réduire l'accessibilité non voulue au levier de verrouillage.

Par ailleurs, des modes de réalisation de l'invention peuvent comporter l'une ou plusieurs des caractéristiques suivantes :
- la face arrière de la portion d'occultation est courbe ou inclinée en direction de la face avant du robinet à mesure qu'elle s'approche d'une extrémité latérale du corps du robinet,
- la face arrière de l'extrémité de préhension du levier de verrouillage, c'est-à-dire la face qui est située en vis-à-vis de de la face avant du corps du robinet, est courbe ou inclinée en direction l'avant du robinet à mesure qu'elle s'approche vers l'extrémité latérale du robinet, pour dévier latéralement un objet rectiligne qui impacterait le levier de verrouillage par l'arrière au niveau de l'extrémité de préhension du levier de verrouillage,
- la portion d'occultation est monobloc avec une portion du corps du robinet délimitant le circuit interne et/ou est formée par une coque rapportée sur la portion du corps du robinet délimitant le circuit interne,
- l'organe de commande comprend au moins l'un parmi : un levier articulé sur le corps, un bouton poussoir à déplacement en translation, un actionneur rotatif tel qu'un volant ou une molette,
- l'organe de commande comprend un levier articulé sur le corps et comprenant une extrémité de préhension notamment terminale, dans sa position de repos l'extrémité de préhension de l'organe de commande étant disposée le long ou en vis-à-vis de la face avant du corps du robinet, dans sa position active l'extrémité de préhension de l'organe de commande étant écartée du corps du robinet et en ce que, lorsque l'organe de commande et dans sa position de repos et que le levier de verrouillage est dans la première position, les extrémités de préhension de l'organe de commande et du levier de verrouillage sont adjacentes,
- l'organe de commande et le levier de verrouillage sont articulés autour d'axes de rotations respectifs distincts ou confondus,
- l'organe de commande et le levier de verrouillage sont articulés autour d'axes de rotations parallèles et en ce que l'organe de commande et le levier de verrouillage se déplacent en rotation dans un même plan ou des plans adjacents parallèles,
- lorsque l'organe de commande est dans sa position de repos et que le levier de verrouillage est dans la première position, une portion du levier de verrouillage est située entre la face avant du corps du robinet et une portion de l'organe de commande c'est-à-dire que, selon la direction avant/arrière du robinet, le levier de verrouillage est occulté partiellement par l'organe de commande à l'exception de sa portion de préhension,
- la seconde section d'ouverture est inférieure à la première section d'ouverture,
- l'ensemble de clapet(s) comporte deux clapets d'obturation distincts mobiles par rapport à des sièges respectifs et définissant en position d'ouverture respectivement les deux sections d'ouverture distinctes, les deux clapets étant commandés respectivement par l'organe de commande et par l'actionneur,
- le robinet comporte un organe de rappel de l'actionneur vers sa première position de verrouillage,
- le robinet comporte un mécanisme de maintien stable de l'organe de commande au moins dans sa position active,
- le robinet comporte un mécanisme de couplage du déplacement de l'organe de commande et de l'actionneur lorsque l'organe de commande est déplacé de sa position active vers sa position de repos et/ou de sa position de repos vers sa position active, le mécanisme de couplage déplaçant automatiquement l'actionneur lorsque l'organe de commande est déplacé,
- les deux clapets d'obturation distincts sont disposés en série dans une même conduite du circuit,
- les deux clapets d'obturation sont commandés par au moins un axe-poussoir mobile commandé par l'organe de commande et par l'actionneur,
- le déplacement de l'actionneur de sa première position de verrouillage vers sa seconde position de déverrouillage déplace le poussoir selon une première course actionnant l'ouverture d'un premier clapet(s) dans une position d'ouverture avec la seconde section d'ouverture du circuit, le déplacement ultérieur de l'organe de commande de sa position de repos vers sa position active déplace le poussoir selon une seconde course actionnant l'ouverture du second clapet dans une position d'ouverture du circuit avec la première section d'ouverture,
- le mécanisme de verrouillage de l'organe de commande dans sa position de repos comprend une butée mécanique mobile,
- le mécanisme de verrouillage de l'organe de commande dans sa position de repos agit sur une came solidaire du levier de commande,
- le mécanisme de verrouillage de l'organe de commande dans sa position de repos comprend une butée mécanique entre un profil de la came de l'organe de commande et un organe mobile d'un mécanisme de transmission de mouvement entre la came et l'ensemble de clapet(s),
- les deux leviers sont articulés sur le corps et comprennent chacun une came respective ayant un profil de came respectif et coopérant avec au moins un poussoir mobile de commande de l'ensemble de clapet(s) d'obturation.

L'invention concerne également un dispositif de stockage et de distribution de fluide sous pression comprenant un réservoir de gaz muni d'un robinet conforme à l'une quelconque des caractéristiques ci-dessus ou ci-dessous et un chapeau de protection du robinet disposé autour du robinet, le chapeau comprenant au moins une ouverture arrière d'accès au robinet par sa face arrière, dans la première position du levier de verrouillage, l'accessibilité directe de l'extrémité de préhension du levier par l'ouverture arrière avec un objet rectiligne étant située dans une fenêtre définie par un direction décalée d'un angle compris entre 20 et 60° par rapport à la direction avant/arrière du robinet, ladite fenêtre ayant une largeur inférieure ou égale à 3cm.

Par exemple, dans la première position du levier de verrouillage, la distance d'accessibilité directe de l'extrémité de préhension du levier au travers de l'ouverture arrière est comprise entre 5cm et 20 cm.

L'invention concerne également un réservoir ou ensemble de réservoirs de fluide sous pression, notamment de gaz sous pression comprenant un robinet conforme à l'une quelconque des caractéristiques ci-dessus ou ci-après.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
- la figure 1 représente une vue en coupe, schématique et partielle, illustrant la structure et le fonctionnement d'un premier exemple de réalisation possible de l'invention,
- les figure 2 et 3 représentent des vues en coupe, schématiques et partielles, illustrant la structure et le fonctionnement d'un second exemple de réalisation possible de l'invention et selon respectivement deux configurations d'utilisation,
- la figure 4 représente une vue schématique et partielle illustrant un exemple de principe de fonctionnement possible et facultatif du robinet,
- la figure 5 représente une vue de la face avant, schématique et partielle, illustrant un autre exemple de réalisation d'un robinet selon l'invention,
- la figure 6 représente une vue de dessus, schématique et partiellement en coupe, du robinet de la figure 5 associé à un chapeau de protection,
- la figure 7 représente une vue de côté (latérale), schématique et partielle, du robinet de la figure 5,
- la figure 8 représente une vue de derrière, schématique et partielle, du robinet de la figure 5 monté sur un réservoir de gaz et protégé par un chapeau,
- la figure 9 représente une vue de derrière et partiellement de biais du robinet de la figure 5 monté sur son réservoir de gaz et protégé par son chapeau.
- le figure 10 représente de devant et de biais du robinet de la figure 5 monté sur son réservoir de gaz et protégé par son chapeau dans une configuration d'ouverture,
- la figure 11 représente une vue en coupe, schématique et partielle, illustrant la structure et le fonctionnement d'un autre exemple de réalisation possible de l'invention,
- la figure 12 représente une vue en coupe agrandie d'un détail de la figure 12.

Le robinet 1 illustré aux figures comprend classiquement un corps 2 abritant un circuit 3 de fluide ayant une extrémité amont 4 destinée à être mis en relation avec une réserve de fluide sous pression et extrémité aval 5 destinée à être mise en relation avec un utilisateur de fluide.

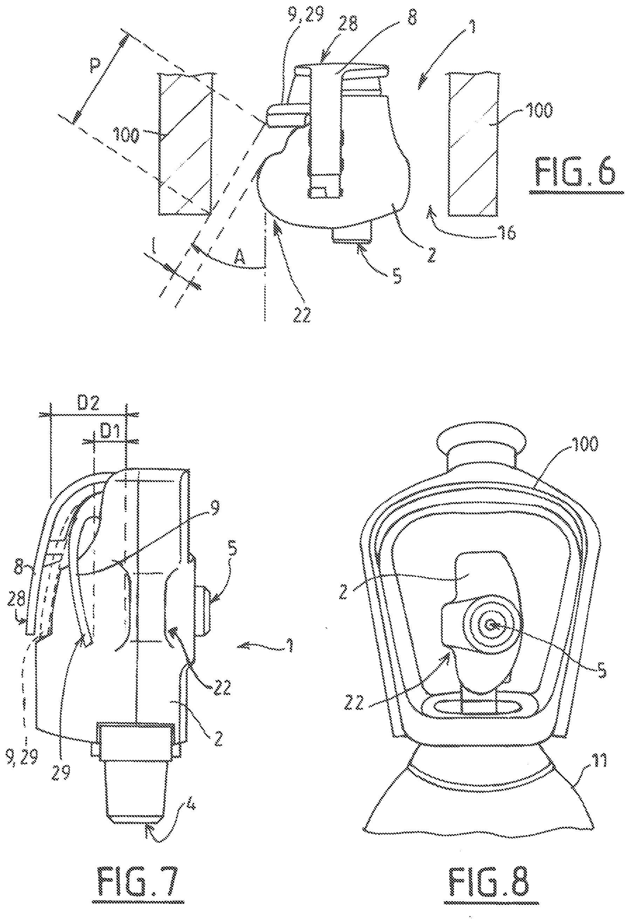

L'extrémité amont 4 peut être raccordée à une bouteille 11 de gaz sous pression (cf. figures 8 à 10) ou à une circuiterie reliée à une bouteille de gaz sous pression ou plusieurs bouteilles (cadre de bouteilles par exemple). A cet effet, l'extrémité correspondante du corps 2 du robinet 1 peut être filetée.

L'extrémité aval 5 débouche par exemple au niveau d'un raccord de sortie.

Le circuit 3 comprend un ensemble de clapet(s) comprenant au moins un clapet 6 d'obturation permettant de fermer ou d'ouvrir le circuit 3 (clapet d'isolation).

Le robinet 1 comprend un organe 8 de commande manuelle de l'ensemble de clapet(s) 6.

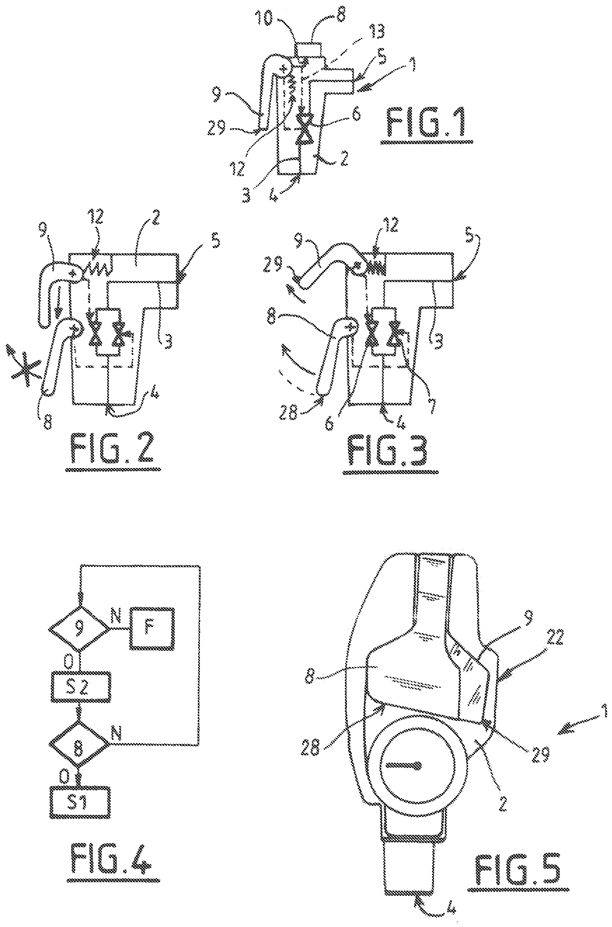

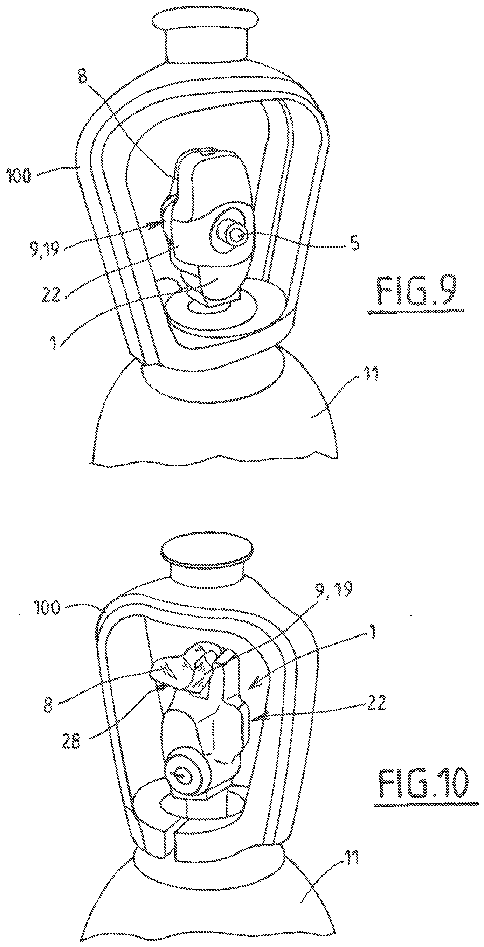

L'organe 8 de commande est monté mobile sur le robinet 1 entre une position de repos (figures 1, 2, 3, 5, 6, 7 et 9) dans laquelle l'ensemble de clapet(s) 6 reste fermé (par exemple via un organe de rappel tel qu'un ressort) qui correspond à une fermeture du circuit 3 et une position active (cf. figure 10) dans laquelle l'organe 8 de commande actionne l'ensemble de clapet(s) 6 dans une position d'ouverture du circuit 3 selon une première section d'ouverture S1 (ouverture complète notamment).

Dans l'exemple de la figure 1, l'organe 8 de commande est un bouton poussoir.

Dans l'exemple des autres figures l'organe 8 de commande est un levier articulé sur le robinet. L'organe 8 de commande pourrait cependant être tout type d'organe (levier, bouton, sélecteur rotatif...) notamment situé sur une face distincte du corps 2 du robinet 1.

Le corps 2 du robinet comprend une face avant (cf. figure 5) et une face arrière (cf. figure 6) et des extrémités ou bords latéraux (cf. les extrémités latérales du robinet à la figure 5).

Comme visible notamment aux figures 6, 7, 9 et 11, le raccord 5 de sortie peut être situé sur la face arrière du corps 2 du robinet 1.

Le robinet 1 comporte un mécanisme 9, 10 de verrouillage de l'organe 8 de commande dans sa position de repos.

Ce mécanisme 9, 10 de verrouillage comprend levier 9 de verrouillage muni d'une extrémité 29 de préhension notamment une extrémité terminale.

Le levier 9 de verrouillage est mobile sur le corps 2 entre une première position de verrouillage assurant un verrouillage de l'organe 8 de commande empêchant son déplacement de sa position de repos vers sa position active (par exemple via une butée 10), et une seconde position de déverrouillage de l'organe 8 de commande autorisant son déplacement de sa position de repos vers sa position active (par exemple butée 10 escamotée).

Dans la première position de verrouillage du levier 9 de verrouillage (cf. figures 1, 2, 5, 6, 7 et 9), l'extrémité terminale 29 de préhension du levier 9 de verrouillage est par exemple disposée le long ou en vis-à-vis de la face avant du corps du robinet 1 à une première distance D1 de la face avant du corps du robinet (cf. figure 7). Cette première distance D1 peut être comprise entre zéro et 4cm par exemple, notamment entre 1 et 3 cm ou entre 1 et 2cm.

Dans sa seconde position de déverrouillage du levier 9 de verrouillage, l'extrémité terminale 29 de préhension peut être écartée de la face avant du corps du robinet 1 d'une seconde distance D2 qui est supérieure à la première distance (cf. figure 7 position en pointillés), par exemple supérieure de 1 à 5 cm. Cette seconde distance D2 peut être comprise entre 1 et 6cm par exemple, notamment entre 3 et 5 cm. Par exemple, dans sa seconde position de déverrouillage du levier 9 de verrouillage, l'extrémité terminale 29 de préhension du levier 9 de verrouillage arrive au niveau ou à proximité de l'extrémité terminale 28 du levier 8 de commande (selon la direction avant/arrière).

Ainsi, pour actionner l'organe 8 de commande, l'opérateur doit déplacer au préalable (ou simultanément) le levier 9 de verrouillage. Pour cela l'utilisateur peut tirer l'extrémité terminale 29 de préhension vers l'avant avec un doigt de façon à écarter le levier 9 de verrouillage du corps 2 du robinet.

Selon une particularité avantageuse, le corps 2 du robinet comporte une portion 22 d'occultation au moins de l'extrémité terminale 29 de préhension du levier 9 de verrouillage. Cette portion d'occultation 22 forme un écran entre la face arrière du corps du robinet et l'extrémité terminale 29 de préhension du levier 9, pour empêcher ou limiter la possibilité qu'un objet rectiligne ne puisse pousser le levier 9 de verrouillage par l'arrière du robinet au niveau de l'extrémité terminale 29 de préhension (pour la déplacer de sa position de verrouillage vers sa position de déverrouillage).

Ainsi, comme visible à la figure 8 en particulier, en vue de derrière, le levier 9 de verrouillage est caché par le corps 2 du robinet 1 et plus particulièrement par la portion 22 d'occultation qui peut former une bosse latérale sur le corps 2 du levier (cf. figure 5 également).

La portion 22 d'occultation peut être monobloc avec la matière du corps du robinet délimitant le circuit 3 interne. C'est-à-dire que la portion 22 d'osculation peut être monobloc avec le métal (laiton par exemple) qui forme structurellement le robinet et abrite ses composants internes. Bien entendu, en variante, et comme représenté aux figures 5 à 10, cette portion 22 d'occultation peut être formée une coque ou un habillage ou un organe rapporté sur le corps (métallique) du robinet délimitant le circuit (3) interne de façon définitive ou de façon amovible. C'est-à-dire que cette portion 22 d'occultation pourrait être retirée en cas de retrait de cette coque extérieure. Ainsi, lorsqu'il s'agit de définir la portion d'occultation 22, le terme « corps » du robinet désigne ici l'enveloppe du robinet définissant les contours extérieurs du robinet.

La portion 22 d'occultation empêche ou limite le risque d'une ouverture intempestive par l'arrière (les termes avant/arrière, et la direction avant/arrière ou les directions latérales font référence aux faces avant et arrière du robinet).

Comme visible à la figure 6, la face arrière de la portion 22 d'occultation peut être courbée ou inclinée en direction de la face avant du robinet à mesure qu'elle s'étend vers une extrémité latérale du corps du robinet. Ceci permet de dévier latéralement un objet qui impacterait la face arrière du corps 2 du robinet.

De même, la face arrière de l'extrémité terminale 29 de préhension du levier 9 de verrouillage, c'est-à-dire la face qui est située en vis-à-vis de de la face avant du corps 2 du robinet 1, peut être courbe ou inclinée en direction l'avant du robinet à mesure qu'elle s'étend vers l'extrémité latérale du robinet. Ceci peut également contribuer à dévier latéralement l'extrémité d'un objet qui impacterait le levier 9 de verrouillage par l'arrière au niveau de l'extrémité terminale 29 de préhension du levier 9 de verrouillage. Ceci limite la possibilité d'un appui prolongé d'un objet sur cette surface.

De préférence, au moins le levier 9 de verrouillage peut se positionner dans un renfoncement du corps 2, ce qui le rend le d'autant moins accessible par la face arrière.

Bien sûr en variante, le ou les leviers 9, 8 pourraient être logés dans un ou des renfoncements creux de la face avant du corps 2 du robinet empêchant tout accès par l'arrière (quel que soit l'angle d'incidence).

Les figures 6 et 8 à 10 illustrent le cas où le robinet est monté sur un réservoir 11 et protégé par un chapeau 100 de protection. Le chapeau 100 (par exemple en forme d'arche) possède au moins une ouverture 16 arrière d'accès au robinet par sa face arrière. De préférence, dans la première position du levier 9 de verrouillage, l'accessibilité directe de l'extrémité terminale 29 de préhension du levier (9) par l'ouverture 16 arrière avec un objet rectiligne (un axe ou une tige par exemple) n'est pas possible ou possible uniquement dans une fenêtre étroite définie par un direction décalée d'un angle (A) par rapport à la direction avant/arrière du robinet. L'angle A est par exemple compris entre 20 et 60° (ou 20 à 40° ou entre 20 et 50°) notamment selon l'angle d'orientation du chapeau par rapport à la direction avant/arrière du robinet).

De plus, ladite fenêtre a de préférence une largeur I inférieure ou égale à 3cm (cf. figure 6 ou deux montants latéraux du chapeau 100 sont représentés schématiquement et en section horizontale).

De plus, de préférence, dans la première position du levier 9 de verrouillage, la distance P d'accessibilité directe de l'extrémité terminale 29 de préhension du levier 9 au travers de l'ouverture arrière 16 est comprise entre 5cm ou 6cm et 20 cm et de préférence compris entre 8 et 15cm au moins.

C'est-à-dire que les géométries relatives de la portion 22 d'occultation et du chapeau 100 rendent impossible ou quasi-impossible l'activation accidentelle du levier 9 de verrouillage par l'arrière. La zone accessible est en effet extrêmement réduite ou nulle. Il faudrait par exemple un angle bien précis défini ci-dessus associé à une forme bien précise d'objet (largeur et longueur) pour pouvoir l'actionner par l'arrière.

Les formes possibles sont obligatoirement élancées et si l'objet est trop court (par exemple inférieur à 6 à 8cm), il n'atteindra pas le levier 9. De plus si l'objet est trop long, le maintien en appui stable sur le levier 9 de verrouillage devient très difficile ou impossible.

La section de l'objet doit en particulier être réduite sinon elle ne passera pas dans l'interstice (I) entre le chapeau 11 et la portion 22 d'occultation du corps 2 (interstice par exemple égal à 2 cm de large).

Dans le cas où l'organe 8 de commande est également un levier, par exemple adjacent au levier 9 de verrouillage, la portion 22 d'occultation occulte également à fortiori le levier 8 de commande.

L'organe 8 de commande et le levier 9 de verrouillage peuvent être articulés autour d'axes de rotations 21, 19 respectifs distincts ou confondus. De même, l'organe 8 de commande et le levier 9 de verrouillage peuvent être articulés autour d'axes de rotations 21, 19 parallèles et les deux leviers 8, 9 peuvent se déplacent en rotation dans un même plan ou des plans adjacents parallèles (cf. figure 7 et 10).

Comme illustré aux figures 5 à 7 notamment, lorsque l'organe 8 de commande est dans sa position de repos et que le levier 9 de verrouillage est dans la première position, de préférence une portion du levier 9 de verrouillage est située entre la face avant du corps du robinet et une portion de l'organe 8 de commande. C'est-à-dire que, selon la direction avant/arrière du robinet, le levier 9 de verrouillage peut être occultée partiellement en face avant par l'organe 8 de commande à l'exception de sa portion 29 terminale de préhension qui fait saillie latéralement par rapport à l'organe 8 de commande.

Ainsi, comme illustré dans le mode de réalisation des figures 5 à 10, l'organe 8 de commande peut comprendre un levier articulé sur le corps et comprenant une extrémité terminale de préhension. Dans sa position de repos, l'extrémité terminale de préhension de l'organe 8 de commande est par exemple disposée le long ou en vis-à-vis de la face avant du corps du robinet 1 (cf. figures 5 à 7 et 10).

Dans sa position de repos, l'extrémité 28 terminale de préhension de l'organe 8 de commande est par exemple espacée de la face avant du corps 2 du robinet d'une distance comprise entre 3 et 5 cm par exemple.

Dans sa seconde position de déverrouillage, l'extrémité 29 terminale du levier 9 de verrouillage peut être écartée de la face avant du corps du robinet 1 d'une seconde distance D2 qui est supérieure à la première distance (cf. figure 7 position en pointillés). Cette seconde distance D2 peut être comprise entre 1 et 6cm par exemple, notamment entre 3 et 5 cm

Dans sa position active, l'extrémité 28 terminale de préhension de l'organe 8 de commande est écartée du corps du robinet (cf. figure 10). Dans sa position active, l'organe 8 de commande peut être sensiblement horizontal, c'est-à-dire sensiblement perpendiculaire à la face avant du corps 2 du robinet.

Lorsque l'organe 8 de commande est dans sa position de repos et que le levier 9 de verrouillage est dans la première position, les extrémités terminales de préhension 28, 29 de l'organe 8 de commande et du levier 9 de verrouillage peuvent être adjacentes et décalées latéralement.

Ceci permet à l'utilisateur de tirer/relever vers lui le levier 9 de verrouillage pour libérer l'organe 8 de commande. L'organe 8 de commande déverrouillé peut à son tour être tiré/relevé (cf. figure 10).

De préférence, lorsque l'organe 8 de commande est dans sa position de repos et que le levier 9 de verrouillage est dans sa première position, l'extrémité terminale 29 de préhension peut être légèrement en retrait vers l'arrière par rapport à l'extrémité terminale 28 de préhension de l'organe 8 de commande, notamment un retrait de quelques millimètres à quelques centimètres, par exemple un à trois centimètres par exemple (cf. figure 7)

Par exemple, lorsque le levier 9 de verrouillage est amené (tiré) dans sa seconde position, son extrémité terminale 29 de préhension arrive au même niveau (vers l'avant) que l'extrémité terminale de préhension de l'organe 8 de commande.

Ensuite, l'organe de commande 8 peut être déplacé vers sa position active (et éventuellement le levier 9 de verrouillage avec lui cf. figure 10).

Selon l'invention, dans sa seconde position de déverrouillage (cf. figure 7 en pointillées), le levier 9 de verrouillage actionne l'ensemble de clapet(s) 6, 7 dans une position d'ouverture du circuit 3 selon une seconde section S2 d'ouverture (ouverture partielle) qui est de préférence inférieure à la première section d'ouverture S1.

De préférence, la seconde section d'ouverture S2 est inférieure à la première section d'ouverture S1 (les débits de soutirage correspondants sont ainsi distincts). Par exemple, le rapport S2/S1 entre la seconde section d'ouverture S2 et la première section d'ouverture S1 est compris entre 1/100 et 1/20 et de préférence entre 1/80 et 1/30. Ainsi, pour pouvoir ouvrir complètement le circuit 3 du robinet 1 via le levier 8, l'utilisateur doit donc au préalable actionner le levier 9 de verrouillage distinct qui assure le déverrouillage du levier 8 de commande et ouvre partiellement le circuit.

Les deux degrés d'ouverture S1, S2 du circuit 3 peuvent être réalisés via un unique clapet 6 ayant deux positions d'ouverture respectives (cf. figure 1). De préférence cependant, les deux degrés d'ouverture (S1 S2) sont réalisés via deux clapets 6, 7 distincts (cf. figures 2 et 3).

Par exemple, comme illustré aux figures 2 et 3, le robinet 1 peut comporter deux clapets 6, 7 d'obturation distincts mobiles par rapport à des sièges respectifs et définissant respectivement, selon leur séquence d'ouverture (l'un 6 ouvert puis les deux 6, 7 ouverts), les deux sections d'ouverture distinctes S2, S1).

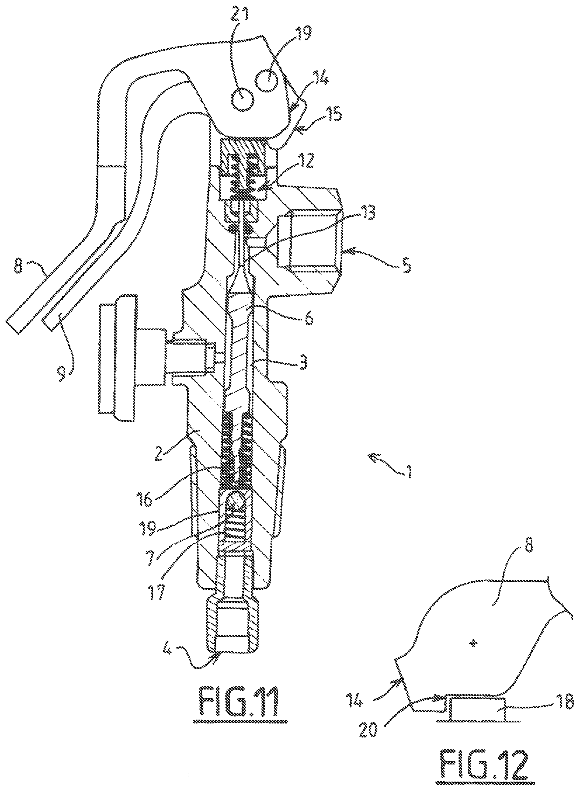

Les deux clapets 6, 7 d'obturation distincts pourraient être disposés en série dans le circuit 3 (cf. figure 11). Ce premier clapet 6 est par exemple mobile en translation par rapport à un siège et contraint vers le siège. En position fermée, le premier clapet 6 peut fermer de façon étanche le circuit. En position fermée, le second clapet 7 ferme de façon non étanche le circuit 3. C'est-dire que le second clapet 7 comprend un orifice calibré définissant la seconde section S2 d'ouverture du circuit 3.

Le second clapet 7 comprend par exemple une bille 7 poussée vers un siège par un ressort 17. Par exemple, la bille 7 est en appui non étanche sur un siège (par exemple une douille) avec un espacement prédéterminé (section d'ouverture S2).

Le passage (seconde section d'ouverture S2) entre la bille 7 et le siège (douille) peut être obtenu en altérant la ligne d'étanchéité entre la bille et son siège par un brochage, un trait de scie ou autre outil sur la bille ou sur son siège. La bille 7 peut ne pas être parfaitement cylindrique (boule à facettes, bille poreuse, ou de tout autre forme pour permettre au gaz de passer avec un débit limité).

Une autre solution alternative est de placer un orifice calibré en parallèle de ce second clapet 7, pour assurer le passage limité du gaz. Alternativement cet orifice calibré peut passer au travers du corps du clapet 7.

L'actionnement du levier 9 de verrouillage peut déplacer un mécanisme de transmission de mouvement d'une première course qui déplace à son tour le premier clapet 6 qui ouvre le circuit 3 au niveau du premier clapet 6. Le gaz qui est admis à passer via l'orifice calibré du second clapet 7 peut ainsi s'échapper vers la seconde extrémité 5 du circuit 3. Le gaz provenant de la première extrémité 4 du circuit 3 passe en effet entre la bille 7 et la douille 19 puis entre corps 2 et le clapet 6 et peut sortir du robinet 1.

Le système de verrouillage du levier 8 de commande peut être localisé au niveau d'une came 14 solidaire de ce dernier.

Par exemple, le profil de la came 14 du levier 8 de commande peut comporter une forme 20 qui vient buter sur une forme complémentaire du mécanisme de transmission de mouvement (et notamment l'extrémité d'un poussoir 18 cf. figure 12). En position haute (actionneur 9 en position de verrouillage cf. figure 6 ou 2), le mécanisme de transmission de mouvement (et notamment l'extrémité d'un poussoir 18) forme une butée mécanique empêchant la rotation du levier 8 de commande.

En position basse (actionneur 9 en position de déverrouillage, cf. pointillés à la figure 7 ou 3), le mécanisme de transmission de mouvement (et notamment l'extrémité d'un poussoir 18) est escamoté et ne forme plus une butée mécanique empêchant la rotation du levier 8 de commande.

A l'issue de cette première course, le levier 8 de commande est ainsi déverrouillé et un débit réduit de gaz est libéré.

Cette première course permet ainsi de positionner le poussoir 18 au-delà d'un angle de butée au niveau du profil 20 de came 14.

Le levier 8 de commande peut ensuite être pivoté à son tour pour déplacer le mécanisme 18, 13 un peu plus loin (seconde course). Cette seconde course permet de séparer le second clapet 7 (bille) de son siège (via l'extrémité du premier clapet 6). Dans cette configuration, le circuit 3 est ouvert de façon plus importante (totalement, première section d'ouverture S1). Ceci permet au gaz un grand débit et une montée en pression plus rapide en aval des clapets.

Lorsque le levier 8 de commande est relevé (position active) le levier 9 d'actionnent peut (ou éventuellement doit) lui aussi être relevé (cf. figure 10). Bien entendu en variante le levier 9 d'actionnement pourrait rester en position basse (plus près du corps que le levier 8 de commande qui est relevé en position active).

Ainsi, les deux clapets 6, 7 peuvent être sont commandés par un même mécanisme de transmission de mouvement et notamment au moins un même poussoir 18, 13 mobile.

Ce mécanisme de transmission de mouvement peut se translater de deux courses différentes, l'une courte permettant un débit limité (seconde section S2 d'ouverture), l'autre longue permettant le plein débit (première section d'ouverture S1).

Bien entendu l'invention n'est pas limitée à l'exemple des figures décrites ci-dessus. Les deux courses du mécanisme de transmission de mouvement peuvent être pilotées par des cames avec des axes de rotation 21, 19 et solidaires des leviers 8, 9 identiques. Les axes de rotation peuvent être confondus ou distincts.

De préférence, la (re)fermeture complète des deux clapets 6, 7 peut être réalisée en un seul geste qui permet de neutraliser les deux clapets 6, 7 dans la même action manuelle.

Par exemple, un mécanisme de couplage du déplacement de l'organe 8 de commande et de l'actionneur 9 peut être intégré aux cames 14, 15 des leviers.

Par exemple, un axe 21 solidaire d'au moins une came 8 peut être reçu dans au moins une gorge formée dans l'autre came 15 et accueillant et guidant l'axe 21.

Ainsi le déplacement du levier 8 de commande vers sa position repos provoque également le retour du levier 9 d'actionnement vers sa position de verrouillage.

Inversement, lorsque le levier 9 de verrouillage a été relevé dans sa seconde position de déverrouillage, le déplacement du levier 8 de commande vers sa position active (par exemple relevée) peut entraîner également le déplacement du levier 9 de verrouillage (relèvement par exemple dans la position de la figure 10).

Bien entendu, l'invention n'est pas limitée aux exemples ci-dessus. Par exemple, le mécanisme de verrouillage pourrait être intégré au niveau des cames 14, 15 via un système d'axes 21 et gorges du même type que celui du mécanisme de couplage. De même, ce mécanisme de verrouillage de l'organe 8 de commande pourrait être localisé ailleurs sur le robinet. De plus ce mécanisme de verrouillage pourrait être du type magnétique et/ou pneumatique et/ou électromécanique et/ou hydraulique.

Selon un mode de réalisation possible, un relèvement du levier 9 de verrouillage 9 permet donc de déverrouiller le levier 8 associé éventuellement à une ouverture partielle du circuit.

Cette configuration procure une double sécurité: 1) la nécessité d'un déverrouillage limitant les ouvertures intempestives 2) le déverrouillage ouvre partiellement le circuit 3 ce qui réalise l'amorce d'une ouverture progressive et avertit l'utilisateur de la présence de gaz en sortie.

Ceci permet de réduire le pic de pression en aval en ralentissant la vitesse de mise en pression de la chambre aval du circuit gaz connecté à la sortie 5 du robinet 1.

La figure 4 illustre schématiquement le fonctionnement de cette possibilité avantageuse mais facultative. Si le levier 9 de verrouillage n'est pas activé (N) (c'est-à-dire s'il est dans sa première position de verrouillage), le circuit 3 est fermé (F). Si le levier 9 de verrouillage 9 est activé vars sa second position de déverrouillage (O), le circuit 3 est ouvert avec une degré d'ouverture S2 qui permet ensuite l'actionnement du levier 8. L'actionnement du levier 8 de commande (O) permet alors d'ouvrir totalement le circuit (S1). Sinon (N), le robinet 1 revient dans sa position fermée ou ouverte selon la position de l'actionneur 9.

De préférence, le sens d'actionnement de l'actionneur 9 est identique (par exemple translation/rotation pour s'écarter du corps 2) au sens d'actionnement du levier 8 de commande (levier 8 de commande relevé pour s'écarter du corps). Idem pour le retour dans les positions de repos et de verrouillage (vers le corps 2).

De préférence également, le levier 9 de verrouillage est monostable, c'est-à-dire que l'utilisateur doit maintenir l'effort sur ce dernier (relevé) pour garder la course active, sinon il retourne automatiquement dans sa première position de verrouillage (circuit 3 fermé).

Pour cela, le robinet 1 peut comporter un organe 12 de rappel de l'actionneur 9 vers sa première position de verrouillage (un ressort notamment) cf. figures 2 et 3. Alternativement ou cumulativement, l'organe de rappel du levier 9 de verrouillage vers sa première position de verrouillage peut comprendre ou être constitué de la pression du fluide dans le circuit. C'est-à-dire que la pression de service du gaz dans le circuit peut assurer un effort sur le levier 9 de verrouillage qui tend à le ramener dans sa première position.

Cependant, il est possible de prévoir une troisième position stable. Par exemple, si le levier 9 de verrouillage accompagne le levier 8 de commande dans sa position active (cf. par exemple figure 10), le levier 9 pourrait avoir également une position stable dans cette troisième position.

Le levier 8 de commande peut quant à lui avoir une course qui est bistable. C'est-à-dire que ses les positions de repos (figure 5) et active (figure 10) peuvent être stables. Par exemple, un mécanisme de point-dure, butée (profil de came du levier 8) assure ces positions stables. L'utilisateur peut relâcher le levier 8 de commande en position active sans que ceci ne provoque la fermeture du circuit 3.

De préférence, la fermeture du circuit 3 (à partir d'une position grande ouverte S1) est réalisée d'un seul geste. De préférence le levier 8 de commande et l'actionneur 9 sont déplacés ensemble en position initiale (circuit fermé) via un mécanisme de couplage du déplacement de l'organe 8 de commande et de l'actionneur 9. Par exemple, ce mécanisme de couplage sollicite automatiquement l'actionneur 9 vers sa première position lorsque l'organe 8 de commande est déplacé de sa position active vers sa position de repos (de la position de la figure 10 vers la position de la figure 5).

De préférence, la manipulation des deux organes 8, 9 est possible d'une seule main (dans le sens de l'ouverture et/ou dans le sens de la fermeture du circuit).

Ainsi, lors de l'actionnement (tirage) du levier de verrouillage 9, une came 15 de ce levier 9 peut déplacer le premier clapet 6 via un mécanisme de transmission de mouvement. Le mécanisme de transmission de mouvement peut comprendre notamment un ou plusieurs axes-poussoirs 13, 18 en série (et/ou en parallèle), un organe élastique 12 (ressort notamment pour rattraper les jeux et/ou maintenir un contact dans la chaine de transmission de mouvement entre la came 15 et le clapet 6). Tout autre mécanisme de transmission de mouvement peut être envisagé. On pourra par exemple se référer au document FR2828922A1.

On conçoit donc que, tout en étant de structure simple et peu coûteuse, l'invention présente de nombreux avantages.

Dans le cas où l'actionnement du levier 9 de déverrouillage réalise une ouverture partielle du circuit, cette structure de robinet permet également d'autres fonctionnalités pour l'utilisateur. Ainsi, l'actionnement bref uniquement de l'actionneur 9 permet à l'utilisateur de générer un jet de gaz suffisant et contrôlé pour purger/nettoyer l'aval du circuit 3 et notamment le raccord de sortie. Ceci est notamment une mesure recommandée par les fabricants de robinets.

L'invention s'applique par exemple aux robinet ou vannes à levier(s), qui peuvent s'ouvrir en levant (ou poussant) le levier d'isolement principale pour bouteille(s) de fluide sous pression (gaz ou mélanges de gaz notamment) ayant par exemple un volume en eau entre 5 et 50 litres.

## Revendications

1. Robinet pour fluide sous pression comprenant un corps (2) ayant une face avant et une face arrière et abritant un circuit (3) interne de fluide ayant une extrémité amont (4) destinée à être mise en relation avec une réserve (11) de fluide sous pression et extrémité aval (5) destinée à être mise en relation avec un utilisateur de fluide, le circuit (3) comprenant un ensemble de clapet(s) (6, 7) comprenant au moins un clapet d'obturation permettant de fermer ou d'ouvrir le circuit (3), le robinet (1) comprend un organe (8) de commande manuelle de l'ensemble de clapet(s) (6, 7), l'organe (8) de commande étant monté mobile sur le corps (2) entre une position de repos dans laquelle l'ensemble de clapet(s) (6, 7) est dans une position de fermeture du circuit (3) et une position active dans laquelle l'organe (8) de commande actionne l'ensemble de clapet(s) (6, 7) dans une position d'ouverture du circuit (3) selon une première section d'ouverture (S1), le robinet (1) comportant un mécanisme (9,10) de verrouillage de l'organe (8) de commande dans sa position de repos, le mécanisme (9, 10) de verrouillage comprenant levier (9) de verrouillage muni d'une extrémité (29) de préhension notamment une extrémité terminale, le levier (9) de verrouillage étant mobile sur le corps (2) entre une première position de verrouillage assurant un verrouillage de l'organe (8) de commande empêchant son déplacement de sa position de repos vers sa position active, et une seconde position de déverrouillage de l'organe (8) de commande autorisant son déplacement de sa position de repos vers sa position active, dans la première position de verrouillage du levier (9) de verrouillage, l'extrémité (29) de préhension du levier (9) de verrouillage étant disposée le long ou en vis-à-vis de la face avant du corps du robinet (1) à une première distance de la face avant du corps du robinet, dans la seconde position de déverrouillage du levier (9) de verrouillage, l'extrémité (29) de préhension étant écartée de la face avant du corps du robinet (1) d'une seconde distance qui est supérieure à la première distance, le corps du robinet comportant une portion (22) d'occultation au moins de l'extrémité (29) de préhension du levier (9) de verrouillage formant un écran entre la face arrière du corps du robinet et l'extrémité (29) de préhension du levier (9), pour empêcher ou limiter la possibilité qu'un objet rectiligne ne puisse pousser le levier (9) de verrouillage par l'arrière du robinet au niveau de l'extrémité (29) de préhension de sa position de verrouillage vers sa position de déverrouillage, **caractérisé en ce que**, dans sa seconde position de déverrouillage, le levier (9) de verrouillage actionne l'ensemble de clapet(s) (6, 7) dans une position d'ouverture du circuit (3) selon une seconde section (S2) d'ouverture.

2. Robinet selon la revendication 1, **caractérisé en ce que** la face arrière de la portion (22) d'occultation est courbe ou inclinée en direction de la face avant du robinet à mesure qu'elle s'approche d'une extrémité latérale du corps du robinet.

3. Robinet selon la revendication 1 ou 2, **caractérisé en ce que** la face arrière de l'extrémité (29) de préhension du levier (9) de verrouillage, c'est-à-dire la face qui est située en vis-à-vis de la face avant du corps du robinet, est courbe ou inclinée en direction de l'avant du robinet à mesure qu'elle s'approche vers l'extrémité latérale du robinet, pour dévier latéralement un objet rectiligne qui impacterait le levier (9) de verrouillage par l'arrière au niveau de l'extrémité (29) de préhension du levier (9) de verrouillage.

4. Robinet selon l'une quelconque des revendications 1 à 3, **caractérisé en ce que** la portion (22) d'occultation est monobloc avec une portion du corps du robinet délimitant le circuit (3) interne et/ou est formée par une coque rapportée sur la portion du corps du robinet délimitant le circuit (3) interne.

5. Robinet selon l'une quelconque des revendications 1 à 4, **caractérisé en ce que** l'organe (8) de commande comprend au moins l'un parmi : un levier articulé sur le corps, un bouton poussoir à déplacement en translation, un actionneur rotatif tel qu'un volant ou une molette.

6. Robinet selon la revendication 5, **caractérisé en ce que** l'organe (8) de commande comprend un levier articulé sur le corps et comprenant une extrémité de préhension notamment terminale, dans sa position de repos l'extrémité de préhension de l'organe (8) de commande étant disposée le long ou en vis-à-vis de la face avant du corps du robinet (1), dans sa position active l'extrémité de préhension de l'organe (8) de commande étant écartée du corps du robinet et **en ce que**, lorsque l'organe (8) de commande et dans sa position de repos et que le levier (9) de verrouillage est dans la première position, les extrémités de préhension (28, 29) de l'organe (8) de commande et du levier (9) de verrouillage sont adjacentes.

7. Robinet selon la revendication 6, **caractérisé en ce que** l'organe (8) de commande et le levier (9) de verrouillage sont articulés autour d'axes de rotations respectifs (21, 19) distincts ou confondus.

8. Robinet selon la revendication 6 ou 7, **caractérisé en ce que** l'organe (8) de commande et le levier (9) de verrouillage sont articulés autour d'axes de rotations (21, 19) parallèles et **en ce que** l'organe (8) de commande et le levier (9) de verrouillage se déplacent en rotation dans un même plan ou des plans adjacents parallèles.

9. Robinet selon l'une quelconque des revendication 6 à 8, **caractérisé en ce que**, lorsque l'organe (8) de commande est dans sa position de repos et que le levier (9) de verrouillage est dans la première position, une portion du levier (9) de verrouillage est située entre la face avant du corps du robinet et une portion de l'organe (8) de commande c'est-à-dire que, selon la direction avant/arrière du robinet, le levier (9) de verrouillage est occultée partiellement par l'organe (8) de commande à l'exception de sa portion de préhension.

10. Robinet selon une quelconque des revendications 1 à 9, **caractérisé en ce que** la seconde section d'ouverture (S2) est inférieure à la première section d'ouverture (S1).

11. Robinet selon l'une quelconque des revendications 1 ou 10, **caractérisé en ce que** l'ensemble de clapet(s) comporte deux clapets (6, 7) d'obturation distincts mobiles par rapport à des sièges respectifs et définissant en position d'ouverture respectivement les deux sections d'ouverture distinctes (S1, S2), les deux clapets (6, 7) étant commandés respectivement par l'organe (8) de commande et par le levier de verrouillage (9).

12. Robinet selon l'une quelconque des revendications 1 à 11, **caractérisé en ce qu'**il comporte un organe (12) de rappel du levier de verrouillage (9) vers sa première position de verrouillage.

13. Dispositif de stockage et de distribution de fluide sous pression comprenant un réservoir (11) de gaz muni d'un robinet conforme à l'une quelconque des revendications précédentes et un chapeau (100) de protection du robinet disposé autour du robinet, le chapeau (100) comprenant au moins une ouverture (16) arrière d'accès au robinet par sa face arrière, dans la première position du levier (9) de verrouillage, l'accessibilité directe de l'extrémité (29) de préhension du levier (9) par l'ouverture (16) arrière avec un objet rectiligne étant située dans une fenêtre définie par un direction décalée d'un angle (A) compris entre 20 et 60° par rapport à la direction avant/arrière du robinet, ladite fenêtre ayant une largeur (l) inférieure ou égale à 3cm.

14. Dispositif de stockage selon la revendication 13, **caractérisé en ce que** dans la première position du levier (9) de verrouillage, la distance (P) d'accessibilité directe de l'extrémité (29) de préhension du levier (9) au travers de l'ouverture arrière (16) est comprise entre 5cm et 20 cm.

## Patentansprüche

1. Hahn für Druckfluid, der einen Körper (2) mit einer Vorderseite und einer Rückseite umfasst und einen inneren Fluidkreislauf (3) beherbergt, der ein stromaufwärtiges Ende (4), das dazu bestimmt ist, mit einem Druckfluidvorrat (11) in Verbindung gebracht zu werden, und ein stromabwärtiges Ende (5), das dazu bestimmt ist, mit einem Fluidbenutzer in Verbindung gebracht zu werden, aufweist, wobei der Kreislauf (3) eine Anordnung von Ventil(en) (6, 7) umfasst, die mindestens ein Absperrventil umfassen, das es gestattet, den Kreislauf (3) zu schließen oder zu öffnen, der Hahn (1) ein Organ (8) zur manuellen Steuerung der Anordnung von Ventil(en) (6, 7) umfasst, wobei das Steuerungsorgan (8) am Körper (2) zwischen einer Ruheposition, in der sich die Anordnung von Ventil(en) (6, 7) in einer Schließposition des Kreislaufs (3) befindet, und einer aktiven Position, in der das Steuerungsorgan (8) die Anordnung von Ventil(en) (6, 7) in eine Öffnungsposition des Kreislaufs (3) gemäß einem ersten Öffnungsquerschnitt (S1) betätigt, beweglich gelagert ist, wobei der Hahn (1) einen Mechanismus (9, 10) zur Verriegelung des Steuerungsorgans (8) in dessen Ruheposition aufweist, wobei der Verriegelungsmechanismus (9, 10) einen Verriegelungshebel (9) umfasst, der mit einem Greifende (29), insbesondere mit einem Abschlussende versehen ist, wobei der Verriegelungshebel (9) am Körper (2) zwischen einer ersten, Verriegelungsposition, die eine Verriegelung des Steuerungsorgans (8) sicherstellt, die dessen Bewegung aus dessen Ruheposition zu dessen aktiven Position verhindert, und einer zweiten, Entriegelungsposition des Steuerungsorgans (8), die dessen Bewegung aus dessen Ruheposition zu dessen aktiven Position gestattet, beweglich ist, wobei in der ersten Verriegelungsposition des Verriegelungshebels (9) das Greifende (29) des Verriegelungshebels (9) entlang oder gegenüber der Vorderseite des Körpers des Hahns (1) in einem ersten Abstand zur Vorderseite des Körpers des Hahns angeordnet ist, wobei in der zweiten Verriegelungsposition des Verriegelungshebels (9) das Greifende (29) um einen zweiten Abstand, der größer als der erste Abstand ist, von der Vorderseite des Körpers des Hahns (1) beabstandet ist, wobei der Körper des Hahns einen Abschnitt (22) zur Verdeckung wenigstens des Greifendes (29) des Verriegelungshebels (9) aufweist, der einen Schirm zwischen der Rückseite des Körpers des Hahns und dem Greifende (29) des Hebels (9) bildet, um die Möglichkeit zu verhindern oder zu begrenzen, dass ein geradliniges Objekt den Verriegelungshebel (9) von der Rückseite des Hahns am Greifende (29) aus dessen Verriegelungsposition zu dessen Entriegelungsposition drücken kann, **dadurch gekennzeichnet, dass** der Verriegelungshebel (9) in seiner zweiten Verriegelungsposition die Anordnung von Ventil(en) (6, 7) in eine Öffnungsposition des Kreislaufs (3) gemäß einem zweiten Öffnungsquerschnitt (S2) betätigt.

2. Hahn nach Anspruch 1, **dadurch gekennzeichnet, dass** die Rückseite des Verdeckungsabschnitts (22) in Richtung der Vorderseite des Hahns gekrümmt oder geneigt ist, in dem Maße, wie sie sich einem seitlichen Ende des Körpers des Hahns annähert.

3. Hahn nach Anspruch 1 oder 2, **dadurch gekennzeichnet, dass** die Rückseite des Greifendes (29) des Verriegelungshebels (9), das heißt die Seite, die sich gegenüber der Vorderseite des Körpers des Hahns befindet, in Richtung der Vorderseite des Hahns gekrümmt oder geneigt ist, in dem Maße, wie sie sich dem seitlichen Ende des Hahns annähert, um ein geradliniges Objekt seitlich abzulenken, das am Greifende (29) des Verriegelungshebels (9) von hinten an den Verriegelungshebel (9) stoßen würde.

4. Hahn nach einem der Ansprüche 1 bis 3, **dadurch gekennzeichnet, dass** der Verdeckungsabschnitt (22) mit dem Abschnitt des Körpers des Hahns einstückig ausgebildet ist, der den inneren Kreislauf (3) begrenzt, und/oder von einer Schale gebildet ist, die auf den Abschnitt des Körpers des Hahns aufgesetzt ist, der den inneren Kreislauf (3) begrenzt.

5. Hahn nach einem der Ansprüche 1 bis 4, **dadurch gekennzeichnet, dass** das Steuerungsorgan (8) mindestens eins von Folgendem umfasst: einen Hebel, der am Körper angelenkt ist, einen Druckknopf mit Translationsbewegung, ein Drehbetätigungselement wie beispielsweise ein Rad oder eine Rolle.

6. Hahn nach Anspruch 5, **dadurch gekennzeichnet, dass** das Steuerungsorgan (8) einen Hebel umfasst, der am Körper angelenkt ist und ein Greifende, insbesondere Abschlussende umfasst, wobei in seiner Ruheposition das Greifende des Steuerungsorgans (8) entlang oder gegenüber der Vorderseite des Körpers des Hahns (1) angeordnet ist, in seiner aktiven Position das Greifende des Steuerungsorgans (8) vom Körper des Hahns beabstandet ist, und dadurch, dass, wenn sich das Steuerungsorgan (8) in seiner Ruheposition und sich der Verriegelungshebel (9) in der ersten Position befindet, die Greifenden (28, 29) des Steuerungsorgans (8) und des Verriegelungshebels (9) benachbart sind.

7. Hahn nach Anspruch 6, **dadurch gekennzeichnet, dass** das Steuerungsorgan (8) und der Verriegelungshebel (9) um jeweilige gesonderte oder zusammenfallende Drehachsen (21, 19) angelenkt sind.

8. Hahn nach Anspruch 6 oder 7, **dadurch gekennzeichnet, dass** das Steuerungsorgan (8) und der Verriegelungshebel (9) um parallele Drehachsen (21, 19) angelenkt sind, und dadurch, dass sich das Steuerungsorgan (8) und der Verriegelungshebel (9) in einer selben Ebene oder parallelen benachbarten Ebenen drehen.

9. Hahn nach einem der Ansprüche 6 bis 8, **dadurch gekennzeichnet, dass**, wenn sich das Steuerungsorgan (8) in seiner Ruheposition befindet und sich der Verriegelungshebel (9) in der ersten Position befindet, sich ein Abschnitt des Verriegelungshebels (9) zwischen der Vorderseite des Körpers des Hahns und einem Abschnitt des Steuerungsorgans (8) befindet, das heißt, dass in der Vorne/Hinten-Richtung des Hahns der Verriegelungshebel (9) teilweise vom Steuerungsorgan (8) verdeckt ist, bis auf seinen Greifabschnitt.

10. Hahn nach einem der Ansprüche 1 bis 9, **dadurch gekennzeichnet, dass** der zweite Öffnungsquerschnitt (S2) kleiner als der erste Öffnungsquerschnitt (S1) ist.

11. Hahn nach einem der Ansprüche 1 oder 10, **dadurch gekennzeichnet, dass** die Anordnung von Ventilen zwei gesonderte Absperrventile (6, 7) aufweist, die bezogen auf jeweilige Sitze beweglich sind und in Öffnungsposition jeweils die zwei gesonderten Öffnungsquerschnitte (S1, S2) definieren, wobei die zwei Ventile (6, 7) jeweils vom Steuerungsorgan (8) und vom Verriegelungshebel (9) gesteuert werden.

12. Hahn nach einem der Ansprüche 1 bis 11, **dadurch gekennzeichnet, dass** er ein Organ (12) zum Zurückholen des Verriegelungshebels (9) zu dessen ersten Verriegelungsposition aufweist.

13. Vorrichtung zur Speicherung und Abgabe von Druckfluid umfassend einen Gasvorratsbehälter (11), der mit einem Hahn nach einem der vorhergehenden Ansprüche versehen ist, und eine Schutzkappe (100) für den Hahn, die um den Hahn herum angeordnet ist, wobei die Kappe (100) mindestens eine hintere Zugangsöffnung (16) zum Hahn von seiner Rückseite umfasst, wobei in der ersten Position des Verriegelungshebels (9) die direkte Zugänglichkeit des Greifendes (29) des Hebels (9) durch die hintere Öffnung (16) mit einem geradlinigen Objekt in einem Fenster liegt, das von einer Richtung definiert ist, die um einen Winkel (A) zwischen 20 und 60° bezogen auf die Vorne/Hinten-Richtung des Hahns versetzt ist, wobei das Fenster eine Breite (l) kleiner als oder gleich 3 cm aufweist.

14. Speicherungsvorrichtung nach Anspruch 13, **dadurch gekennzeichnet, dass** in der ersten Position des Verriegelungshebels (9) der Abstand (P) zur direkten Zugänglichkeit des Greifendes (29) des Hebels (9) durch die hintere Öffnung (16) zwischen 5 cm und 20 cm liegt.

## Claims

1. Valve for pressurized fluid, comprising a body (2) having a front face and a rear face and housing an internal fluid circuit (3) having an upstream end (4) intended to be placed in communication with a reserve (11) of pressurized fluid and a downstream end (5) intended to be placed in communication with a user of fluid, the circuit (3) comprising a collection of valve shutter(s) (6, 7) comprising at least one shut-off valve shutter for closing or opening the circuit (3), the valve (1) comprising a member (8) for manually controlling the collection of valve shutter (s) (6, 7), the control member (8) being mounted on the body (2) so as to be movable between a rest position, in which the collection of valve shutter(s) (6, 7) is in a position in which the circuit (3) is closed, and an active position, in which the control member (8) actuates the collection of valve shutter (s) (6, 7) into a position in which the circuit (3) is open with a first bore section (S1), the valve (1) having a mechanism (9, 10) for locking the control member (8) in its rest position, the locking mechanism (9, 10) comprising a locking lever (9) provided with an end (29) for grasping, notably a terminal end, the locking lever (9) being able to move on the body (2) between a locked first position, which locks the control member (8) to prevent it from moving from its rest position towards its active position, and an unlocked second position, in which the control member (8) is unlocked, allowing it to move from its rest position towards its active position, wherein, in the locked first position of the locking lever (9), the end (29) for grasping of the locking lever (9) is disposed along or in a manner facing the front face of the body of the valve (1) at a first distance from the front face of the body of the valve, in the unlocked second position of the locking lever (9), the end (29) for grasping is spaced apart from the front face of the body of the valve (1) by a second distance greater than the first distance, the body of the valve having a concealing portion (22) for concealing at least the end (29) for grasping of the locking lever (9), forming a barrier between the rear face of the body of the valve and the end (29) for grasping of the lever (9), in order to prevent or limit the possibility of a rectilinear object being able to push the locking lever (9) from its locked position toward its unlocked position from the rear of the valve at the end (29) for grasping, **characterized in that**, in its unlocked second position, the locking lever (9) actuates the collection of valve shutter (s) (6, 7) into a position in which the circuit (3) is open with a second bore section (S2).

2. Valve according to Claim 1, **characterized in that** the rear face of the concealing portion (22) is curved or inclined in the direction of the front face of the valve as it becomes closer to one lateral end of the body of the valve.

3. Valve according to Claim 1 or 2, **characterized in that** the rear face of the end (29) for grasping of the locking lever (9), that is to say the face that faces the front face of the body of the valve, is curved or inclined in the direction of the front of the valve as it becomes closer to the lateral end of the valve, in order to laterally deflect a rectilinear object that might impinge on the locking lever (9) from behind at the end (29) for grasping of the locking lever (9).

4. Valve according to any one of Claims 1 to 3, **characterized in that** the concealing portion (22) is in one piece with a portion of the body of the valve delimiting the internal circuit (3) and/or is formed by a shell attached to the portion of the body of the valve delimiting the internal circuit (3).

5. Valve according to any one of Claims 1 to 4, **characterized in that** the control member (8) comprises at least one of the following: a lever articulated to the body, a push-button to be moved in translation, a rotary actuator such as a handwheel or a knob.

6. Valve according to Claim 5, **characterized in that** the control member (8) comprises a lever articulated to the body and comprising an end for grasping, notably a terminal end for grasping, wherein, in its rest position, the end for grasping of the control member (8) is disposed along or in a manner facing the front face of the body of the valve (1), in its active position, the end for grasping of the control member (8) is spaced apart from the body of the valve, and **in that**, when the control member (8) is in its rest position and the locking lever (9) is in the first position, the ends (28, 29) for grasping of the control member (8) and of the locking lever (9) are adjacent to one another.

7. Valve according to Claim 6, **characterized in that** the control member (8) and the locking lever (9) are articulated about respective, distinct or coincident rotary pins (21, 19).

8. Valve according to Claim 6 or 7, **characterized in that** the control member (8) and the locking lever (9) are articulated about parallel rotary pins (21, 19), and **in that** the control member (8) and the locking lever (9) move in rotation in one and the same plane or in parallel adjacent planes.

9. Valve according to any one of Claims 6 to 8, **characterized in that**, when the control member (8) is in its rest position and the locking lever (9) is in the first position, a portion of the locking lever (9) is situated between the front face of the body of the valve and a portion of the control member (8), meaning that, in the front/rear direction of the valve, the locking lever (9) is partially concealed by the control member (8) except for its portion for grasping.

10. Valve according to any one of Claims 1 to 9, **characterized in that** the second bore section (S2) is smaller than the first bore section (S1).

11. Valve according to either one of Claims 1 and 10, **characterized in that** the collection of valve shutter(s) has two distinct shut-off valve shutters (6, 7) that are able to move with respect to respective seats and, in the open position, respectively define the two distinct bore sections (S1, S2), the two valve shutters (6, 7) being controlled by the control member (8) and the locking lever (9), respectively.

12. Valve according to any one of Claims 1 to 11, **characterized in that** it has a return member (12) for returning the locking lever (9) towards its locked first position.

13. Device for storing and dispensing pressurized fluid, comprising a gas reservoir (11) provided with a valve according to any one of the preceding claims and a protective bonnet (100) for protecting the valve that is disposed around the valve, the bonnet (100) comprising at least one rear opening (16) for accessing the valve via its rear face, wherein, in the first position of the locking lever (9), direct access to the end (29) for grasping of the lever (9) via the rear opening (16) with a rectilinear object is possible through a window defined by a direction offset by an angle (A) of between 20 and 60° with respect to the front/rear direction of the valve, said window having a width (1) less than or equal to 3 cm.

14. Storage device according to Claim 13, **characterized in that**, when the locking lever (9) is in the first position, the distance (P) of direct access to the end (29) for grasping of the lever (9) through the rear opening (16) is between 5 cm and 20 cm.
